(19) Europäisches Patentamt
European Patent Office
Office européen des brevets

(11) EP 4 509 828 A1

(12) **EUROPEAN PATENT APPLICATION**

(43) Date of publication:
**19.02.2025 Bulletin 2025/08**

(21) Application number: **24191325.0**

(22) Date of filing: **29.07.2024**

(51) International Patent Classification (IPC):
***G01N 29/04*** *(2006.01)* ***G01N 29/44*** *(2006.01)*

(52) Cooperative Patent Classification (CPC):
**G01N 29/043; G01N 29/069; G01N 29/4472;**
G01N 2291/0258; G01N 2291/0289;
G01N 2291/106

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.08.2023 IN 202321055203**

(71) Applicant: **Tata Consultancy Services Limited Maharashtra (IN)**

(72) Inventors:
- **BASU, Subhadeep 700156 Kolkata (IN)**
- **SINHARAY, Arijit 700156 Kolkata (IN)**
- **CHAKRAVARTY, TAPAS 700156 Kolkata (IN)**
- **GAIN, Supriya 700156 Kolkata (IN)**
- **PAL, Arpan 700156 Kolkata (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR DAMAGE LOCALIZATION**

(57) This disclosure relates generally to a method and system for damage localization on surfaces made of composites and metals. State-of-the-art methods for ultrasonic guided wave-based damage localization provide a reasonable accuracy. However, accuracy of prediction based on minimum number of observations is not yet achieved. The disclosed method provides damage localization by capturing response to the ultrasonic tone burst transmitted by a plurality of active piezoelectric sensors. The disclosed method provides a modified RAPID algorithm that considers an attenuation of the ultrasonic guided waves and factors energy of transmitted and received signals while predicting damage location. The method provides iterative grid search reduction mechanism to predict damage on the surfaces made of composites and metals.

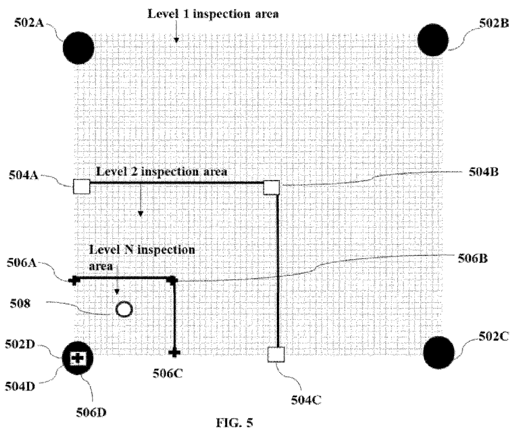


FIG. 5

EP 4 509 828 A1

## Description

CROSS-REFERENCE TO RELATED APPLICATIONS AND PRIORITY

The present application claims priority from Indian patent application no. 202321055203, filed on August 17, 2023.

TECHNICAL FIELD

The disclosure herein generally relates to the field of damage localization, and, more particularly, to a method and system for damage localization on surfaces through ultrasonic guided wave transmission using reduced grid approach.

BACKGROUND

Ultrasonic guided wave is a popular Non-Destructive Testing (NDT) technique which has been used for damage inspection in metal and composite sheets for many years. This technique is mainly useful for inspection of long range metallic or composite structures such as oil and natural gas pipelines, wind turbine blades, wings of aircraft etc. Ultrasonic NDT is very widely used; it is very sensitive to defects whilst being totally insensitive to the parts of the structure which are remote from test location and to the support conditions. The principle of ultrasonic NDT is to transmit a wave signal into a structure, and then to detect defects by receiving and examining subsequent signals. A common configuration ('pulse-echo') is to position a transducer on one side of the structure, to transmit a signal into the structure, and then to receive reflections using the same transducer. If defects are present, then sound is reflected from the defects. Reflected sound is analyzed in order to determine the presence and the location of the discontinuity or the defect. Cracks, gaps, pores or other discontinuities can be determined easily by ultrasonic inspection because they form reflective surface. Most ultrasonic testing is done using compression waves, structure-guided waves or guided waves. The guided waves offer greater sensitivity than that of other standard normal beam ultrasonic inspection or other NDT techniques. Using guided waves, inspection over long distances from a single probe position is possible giving complete volumetric coverage of the item to be inspected.

Over the past few decades, different ultrasonic guided waves-based approaches have been introduced to visualize damage inside a structure. One such method based on guide waves principle is a Reconstruction Algorithm for Probabilistic Inspection (RAPID). The RAPID is a probability-based algorithm, which is based on computing signal dissimilarity coefficient (SDC) of received signals in reference and sample sheets for each transmitter-receiver pair. The main principle of this algorithm is when there is damage in the structure, a part of transmitted signal will hit the damage first and a reflected signal from the damage will be received at the receiver via indirect path along with direct path from transmitter to receiver.

In general, different types of array configurations are used to detect damage using ultrasound approach. In general, multiple number of sensors are required to detect damage accurately in a large structure. As the number of sensors increases, computation of $T_x$-$R_x$ trajectories will increase. When n sensors are placed in a rectangular configuration, n(n-1) number of $T_x$-$R_x$ paths need to be computed for proper detection of damage using RAPID algorithm. For inspection of damage in the large structure, a greater number of sensors are required, and computation of $T_x$-$R_x$ trajectories become a tedious job. Hence, optimal positioning of sensors is important to reduce computation and quickly identify damages.

SUMMARY

Embodiments of the present disclosure present technological improvements as solutions to one or more of the above-mentioned technical problems recognized by the inventors in conventional systems. For example, in one embodiment, a method of localizing damage on surfaces is provided. The method includes, transmitting, via a plurality of active piezoelectric sensors among a plurality of piezoelectric sensors controlled by one or more hardware processors, an ultrasonic tone burst on a damaged surface, and on a damage-free surface, wherein the plurality of piezoelectric sensors is arranged to form a grid structure. In an aspect, the piezoelectric sensors among the plurality of piezoelectric sensors are required for receiving ultra tone burst response in damaged surface and damage free surface. A grid is formed using plurality of piezoelectric sensors arranged equidistant to each other on the surface to be inspected for damage localization. The plurality of piezoelectric sensors is such that at a time one piezoelectric sensor transmits the ultrasonic tone burst and rest all piezoelectric sensors in the grid receives the response to the ultrasonic tone burst. In the next cycle, another piezoelectric sensor placed next to the first piezoelectric sensor transmits the ultrasonic tone burst and rest all piezoelectric sensors receives the response to ultrasonic tone burst. In this way each piezoelectric sensor acts as transmitter (Tx) and receiver (Rx) creating plurality of transmitter-receiver paths (Tx-Rx paths). Further the method includes receiving, via the plurality of active piezoelectric sensors, an ultrasonic tone burst response from the damaged surface to create a sample dataset, and from the damage-free surface to create a reference dataset. The grid is placed on both, the damaged surface as well as the damage free surface and response to the ultrasonic tone burst transmitted across the grid is captured as plurality of $T_x$-$R_x$ paths to create the sample dataset and the reference dataset. The active piezoelectric sensors among the plurality of piezoelectric sensors are the piezoelectric sensors actively contributing as the transmitter and the receiver to form the Tx-Rx paths in damaged surface and damage free surface. The subset of piezoelectric sensors among the plurality of piezoelectric sensors placed at first positions of the grid transmit the 5 cycle ultrasonic tone burst and remaining piezoelectric sensors receive the response of the ultrasonic tone burst, and in successive iteration a piezoelectric sensor placed next to the piezoelectric sensor placed at first position transmits the 5 cycle ultrasonic tone burst and rest other piezoelectric sensors receives the response of the ultrasonic tone burst; the cycle continues unless all piezoelectric sensors act as the transmitter. The method further includes, applying to the sample dataset and the reference dataset, a reconstruction algorithm for probabilistic inspection of defects (RAPID) to identify an initial probabilistic damage location, a centroid of the initial probabilistic damage location, a quadrant of the initial probabilistic damage location and a first set of active piezoelectric sensors among the plurality of piezo electric crystals surrounding the initial probabilistic damage location. The initial probabilistic damage location is obtained by calculating signal dissimilarity coefficient (SDC) based on dissimilarity between a first received signal obtained from plurality of $T_x$-$R_x$ paths on damaged surface and a second received signal obtained from plurality of $T_x$-$R_x$ paths on damage free. The first received signal is a response received by a first piezoelectric sensor of the grid acting as a receiver ($R_x$) to the ultrasonic tone burst transmitted from a second piezoelectric sensor of the grid acting as a transmitter ($T_x$) positioned on the damaged surface, wherein the receiver ($R_x$) and the transmitter ($T_x$) forms a $T_x$-$R_x$ path. Similarly, the second received signal represents a response received by the first piezoelectric sensor acting as the receiver ($R_x$) to the ultrasonic tone burst transmitted from the second piezoelectric sensor acting as the transmitter ($T_x$) positioned on the damage free surface. The probability map is obtained from SDC. This probability map is used to estimate first probabilistic damage location, and wherein selective piezoelectric sensors surrounding the centroid of the first damage location forms a reduced grid. The method further includes locating a second set of piezoelectric sensors on the initial damage location wherein second set of piezoelectric sensors forms a reduced grid from among the first set of piezoelectric sensors surrounding the centroid of the initial damage location. The method further includes estimating the size of the reduced grid. If size of the reduced grid is greater than the pre-defined size, the method includes iteratively calculating a ratio of received signal energy of $T_x$-$R_x$ paths of damaged surface and received signal energy of $T_x$-$R_x$ paths of damage free surface. The pre-defined grid size is a square grid wherein each side of the square grid is equal to the wavelength of the signal transmitted by the piezoelectric sensors. The method further includes applying iteratively, a modified RAPID (M-RAPID) into the reduced grid to identify subsequent probabilistic damage locations, quadrants of the subsequent probabilistic damage locations and a third set of piezoelectric sensors withing the second set of piezoelectric sensors surrounding each of the subsequent probabilistic damage locations. The M-RAPID factors the ratio of the received signal energy of the $T_x$-$R_x$ path of damaged surface and the received signal energy of the $T_x$-$R_x$ path of damage free surface while estimating damage in the reduced grid. The M-RAPID locates the damage more accurately by iteratively minimizing the size of the grid and locating the damage based on ultrasonic tone burst response transmitted and subsequently received on the reduced grid. Finally, the method includes averaging the subsequent probabilistic damage locations obtained by iterative application of the M-RAPID on the reduced grid to estimate an actual place of damage. The centroid of the damage location obtained by iterative application of the M-RAPID algorithm on the reduced grid is averaged to obtain actual damage location.

In another aspect, a system for localizing damage on surfaces is provided. The system comprises memory storing instructions; one or more communication interfaces; and one or more hardware processors coupled to the memory via the one or more communication interfaces, wherein the one or more hardware processors are configured by the instructions to transmit, via a plurality of active piezoelectric sensors from among a plurality of piezoelectric sensors, an ultrasonic tone burst on a damaged surface, and on damage free surface, wherein the plurality of piezoelectric sensors is arranged to form a grid structure. Further the system includes to receive, via the plurality of active piezoelectric sensors, an ultrasonic tone burst response from the damaged surface to create a sample dataset, and from the damage-free surface to create a reference dataset. The active piezoelectric sensors among the plurality of piezoelectric sensors are the piezoelectric sensors actively contributing as the transmitter and the receiver to form the Tx-Rx paths in damaged surface and damage free surface. Furthermore, the system includes, to apply, to the sample dataset and the reference dataset, a reconstruction algorithm for probabilistic inspection of defects (RAPID) to identify an initial probabilistic damage location, a centroid of the initial probabilistic damage location, a quadrant of the initial probabilistic damage location and a first set of active piezoelectric sensors among the plurality of piezo electric crystals surrounding the initial probabilistic damage location. Further, the system includes locating a second set of piezoelectric sensors on the initial damage location wherein second set of piezoelectric sensors forms a reduced grid from among the first set of piezoelectric sensors surrounding the centroid of the initial damage location. Further the system includes to estimate the size of the reduced grid. If the size of the reduced grid is greater than the pre-defined size, the system includes, to iteratively calculate, a ratio of received signal energy of $T_x$-$R_x$ paths of damaged surface and received signal energy of $T_x$-$R_x$ paths of damage free surface. Further, the system includes to apply iteratively, a modified RAPID (M-RAPID) into the reduced grid to identify subsequent probabilistic damage locations, quadrants of the subsequent probabilistic damage locations and a third set of piezoelectric sensors withing the second set of piezoelectric sensors surrounding each of the subsequent probabilistic damage locations. Finally, the system includes to average the subsequent probabilistic damage locations obtained by iterative application of the M-RAPID on the reduced grid to estimate an actual place of damage.

In yet another aspect, there is provided a computer program product comprising a non-transitory computer readable medium having a computer readable program embodied therein, wherein the computer readable program, when executed on a computing device causes the computing device for localizing damage on surfaces by transmitting, via a plurality of active piezoelectric sensors from among a plurality of piezoelectric sensors, an ultrasonic tone burst on a damaged surface, and on damage free surface, wherein the plurality of piezoelectric sensors is arranged to form a grid structure. Further the computer readable program includes, receiving via the plurality of active piezoelectric sensors, an ultrasonic tone burst response from the damaged surface to create a sample dataset, and from the damage-free surface to create a reference dataset. The active piezoelectric sensors among the plurality of piezoelectric sensors are the piezoelectric sensors actively contributing as the transmitter and the receiver to form the $T_x$-$R_x$ paths in damaged surface and damage free surface. Further the computer readable program includes applying to the sample dataset and the reference dataset, a reconstruction algorithm for probabilistic inspection of defects (RAPID) to identify an initial probabilistic damage location, a centroid of the initial probabilistic damage location, a quadrant of the initial probabilistic damage location and a first set of active piezoelectric sensors among the plurality of piezo electric crystals surrounding the initial probabilistic damage location. Further, the computer readable program includes, locating a second set of piezoelectric sensors on the initial damage location wherein second set of piezoelectric sensors forms a reduced grid from among the first set of piezoelectric sensors surrounding the centroid of the initial damage location. Further the computer readable program includes estimating the size of the reduced grid. If the size of the reduced grid is greater than the pre-defined size, the system includes, to iteratively calculate, a ratio of received signal energy of Tx-Rx paths of damaged surface and received signal energy of Tx-Rx paths of damage free surface. Further, the computer readable program includes applying iteratively, a modified RAPID (M-RAPID) into the reduced grid to identify subsequent probabilistic damage locations, quadrants of the subsequent probabilistic damage locations and a third set of piezoelectric sensors withing the second set of piezoelectric sensors surrounding each of the subsequent probabilistic damage locations. Finally, the computer readable program includes averaging the subsequent probabilistic damage locations obtained by iterative application of the M-RAPID on the reduced grid to estimate an actual place of damage.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary block diagram of a system for localizing damage on surfaces, in accordance with some embodiments of the present disclosure.

FIGS. 2A and 2B illustrates a flow diagram depicting a method for damage localization, in accordance with some embodiments of the present disclosure.

FIGS. 3A and 3B illustrate a schematic of piezoelectric sensor arrangement to form a grid structure, in accordance with some embodiments of the present disclosure.

FIGS. 4A and 4B illustrate a schematic of wave propagation in (a) reference sheet (damage free surface), and (b) sample sheet (damaged sheet), in accordance with some embodiments of the present disclosure.

FIG. 5 illustrates an active piezoelectric sensor arrangement forming reduced grid at various levels based on subsequent iterations, in accordance with some embodiments of the present disclosure.

FIG. 6 is a probability map illustrating first level grid search reduction for damage localization in sample sheet, in accordance with some embodiments of the present disclosure.

FIG. 7 is a probability map illustrating second level grid search reduction for damage localization in sample sheet, in accordance with some embodiments of the present disclosure.

FIG. 8 is a probability map plot illustrating state-of-art RAPID algorithm-based damage localization in sample sheet, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Ultrasonic guided wave is a popular NDT technique which has been used for damage inspection in metal and composite sheets for many years. This technique is mainly useful for inspecting large samples or structures such as oil and natural gas pipelines, wind turbine blades, wings of aircraft etc. It has been reported that ultrasonic guided wave attenuates drastically when it propagates through composite materials. This makes damage localization more challenging using ultrasonic guided wave. Over the past few decades, several different approaches exploiting ultrasonic Guided waves have been introduced to visualize damage inside structures. Reconstruction Algorithm for Probabilistic Inspection of Defects (RAPID) is a probability based tomographic method, which is based on computing signal dissimilarity coefficient (SDC) of received signals between baseline and test samples for each transmitter-receiver path. The presence of damage significantly changes the received signal waveform with respect to an undamaged path that affects the SDC value. Several sensors forming different $T_x$-$R_x$ paths provide different SDC values for each path. A collective observation of the SDC thus provides key information of possible damage location. Evidently using higher number of sensors forming several $T_x$-$R_x$ paths increase the damage localization accuracy however, higher number of paths also increases the computational load accordingly. For example, n sensors arranged in a rectangular configuration typically use n*(n-1) computations. In addition to the rectangular configuration, several other sensor configurations have also been explored in the literature.

The embodiments herein provide a method and system for latency damage localization on the surfaces made of composites and metals. The method provides a grid search reduction approach for detecting the damage location detection in surfaces using guided waves. Unlike existing approaches that require all piezoelectric sensors on a quadrant of a grid to locate damage using signal transmission the method restricts selection of the piezoelectric sensors for a given quadrant to few active piezoelectric sensors, in accordance with location of the grid quadrant. Only the currently active piezoelectric sensors contribute to signal transmission and reception rather than the entire sensors in the quadrant. Further, actual place of damage is detected based on difference of pattern of signal transmission and reception path from a damage free surface and a damaged surface using a combination of state of the art RAPID and a modified-RAPID disclosed herein applied on identified active piezoelectric sensors. The active piezoelectric sensors are identified such that they provide optimal positioning reducing the computational load significantly and in turn the reduces processing time. Thus, the system disclosed provides an effective and quick screening tool for damage localization. The method enables effectively determining quadrant within which damage is located and the nearest grid piezoelectric sensors.

Furthermore, the system applies for metallic and composite materials as ultrasonic guided wave propagates both in metals and composites.

There are unique challenges in damage localization on surfaces which depend on the structural material and geometry, and the types of damages that are to be detected and monitored. In ultrasonic guided wave-based methods, because of the dispersion characteristics, different wave packets in the received signals are sensitive to different types of damages, depending on the structure of the material. For example, in composite structures, impact damages could result in the largest change in the Zero-order symmetric ultrasonic wave mode. This mode could be generally sufficient for impact damage detection in composite structures. This is different from metallic structures, where a crack damage could mostly alter the anti-symmetric ultrasonic wave mode while a corrosion damage could also alter the symmetric mode at the same time. Identifying the surface damage, irrespective of material of the surfaces is challenging. A unique approach that precisely locate the damage on surfaces by reduced grid search that facilitate inspection of the surfaces in selective grids forming small quadrants. The reduced grid structures while estimating response of transmitted signals from the damaged surfaces is quite accurate in predicting the damage.

Referring now to the drawings, and more particularly to FIG. 1 through FIG. 8, where similar reference characters denote corresponding features consistently throughout the figures, there are shown preferred embodiments, and these embodiments are described in the context of the following exemplary system and/or method.

FIG.1 illustrates an exemplary block diagram of a system for localizing damage on surfaces, in accordance with some embodiments of the present disclosure.

In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) 106 can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the system 100 includes data acquisition module 108, operatively connected to piezoelectric sensor grid 110 to store transmitter and receiver signals.

In an embodiment, the memory 102 may include a database or repository. The memory 102 may comprise information pertaining to input(s)/output(s) of each step performed by the processor(s) 104 of the system 100 and methods of the present disclosure. In an embodiment, the database may be external (not shown) to the system 100 and coupled via the I/O interface 106. In an embodiment, the memory 102 includes a reference dataset 112 and a sample dataset 114. The input of both datasets is stored in a database 120. The memory 102, further includes a transmitter-receiver signal processing unit 118 for handling a plurality of signals being received at a plurality of piezoelectric sensors. The memory 102 further includes damage localization modules, RAPID 120 and M-RAPID 122. The RAPID module 120 executes initial damage localization based on grid search whilst the M-RAPID module 122 executes actual damage localization based on iteratively performing grid search. The memory 102 further includes a plurality of modules (not shown here) comprises programs or coded instructions that supplement applications or functions performed by the system 100 for executing different steps involved in the process of damage localization on surfaces made of composites or metals. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 104, or by a combination thereof. The plurality of modules can include various sub-modules (not shown).

FIGS. 2A and 2B illustrates a is a flow diagram depicting a method 200 for damage localization on surfaces according to some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1 through FIG. 8. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method 200, the one or more hardware processors 104 are configured to initiate an ultrasonic tone burst from a plurality of piezoelectric sensors. From the plurality of piezoelectric sensors, arranged in the form of a grid, transmitting via transmitter ($T_x$), an ultrasonic tone burst, and receiving via receiver ($R_x$), a response to the ultrasonic tone burst by way of plurality of $T_x$-$R_x$ paths. In the grid, at a time, one piezoelectric sensor starts to transmit the ultrasonic tone burst. This becomes the first piezoelectric sensor of the grid. The response of this tone burst is captured by the other piezoelectric sensors of the grid except the transmitting one. After that, the piezoelectric sensors placed next to the first piezoelectric sensor transmits ultrasonic tone burst of same amplitude and same signal frequency that of the first sensor; and the response of this tone burst of same time duration is captured by other piezoelectric sensors except the transmitting piezoelectric sensor. This process of transmitting 5 cycle tone burst and receiving the response by other piezoelectric sensors is carried out for all the sensors present in the grid. The piezoelectric sensor of the grid transmits the ultrasonic tone burst, acts as a transmitter ($T_x$) and the sensor of the grid receiving the response to the ultrasonic tone burst acts as a receiver ($R_x$). Therefore, each signal transmission between the transmitter and the receiver forms a $T_x$-$R_x$ path.

At step 204 of the method 200, the one or more hardware processors 104 are configured to create the sample dataset 112 by capturing $T_x$-$R_x$ paths in the damaged surface; and the reference dataset 114 by capturing $T_x$-$R_x$ paths in the damage free surface. For capturing ultrasonic tone burst response, a reference material of a particular dimension is taken which is known to be flawless without any structural damages present on its surface. Similarly, the process of capturing signals through the plurality of $T_x$-$R_x$ paths is carried on damaged surface as well as on the damage free surface. The dataset comprising signals captured by all the $T_x$-$R_x$ paths in damaged surface forms a sample dataset; and the signals captured by all the $T_x$-$R_x$ paths in damage free surface forms a reference dataset. Let the center of true damage location be referred as Q(x, y) on the sample. The number of sensors and the distance between any two adjacent sensors of the grid on both damaged surface and damage-free surface remains the same. All the signal parameters and positions of the sensors remain the same for both the damaged surface and the damage free surface.

At step 206 of the method 200, the one or more hardware processors 104 are configured to apply, to the sample dataset and the reference dataset, the RAPID algorithm to identify an initial probabilistic damage location, its centroid, a quadrant and a first set of active piezoelectric sensors surrounding the initial probabilistic damage location. While creating the sample dataset and the reference dataset, response is recorded for all the piezoelectric sensors present in the grid.

It can be noted that even though the state-of-the-art RAPID is applied, it is applied to the response of the active piezoelectric sensors and not the entire piezoelectric sensors as in state of the art grid approaches. In the grid, the piezoelectric sensors placed at corners of the grid the one placed at the middle are considered as an active piezoelectric sensors. Therefore, RAPID algorithm is applied only on five sensor grid. Let the location of $i^{th}$ transmitter be ($x_i$, $y_i$) and $j^{th}$ receiver be ($x_j$, $y_j$). The position of the transmitters and the receivers are known whereas the damage location is unknown. The damage location is to be detected. Let the damage be located at (x, y). The received signal of a particular $T_x$-$R_x$ path with $i^{th}$ transmitter and $j^{th}$ receiver, collected from both reference dataset (X) and sample dataset (Y). This is represented in FIGS. 4A and 4B respectively.

The correlation coefficient ( $\rho_{ij}$) for this $T_x$-$R_x$ path is computed using the following formula (equation 1):

$$\rho_{ij} = \frac{C_{XY}}{\sigma_X . \sigma_Y} \quad (1)$$

where, $C_{XY}$ is the covariance of X and Y and this can be computed as follows (equation 2):

$$C_{XY} = \sum_{k=1}^{K} (X_k - \mu_X)(Y_k - \mu_Y) \quad (2)$$

where, $\mu_X$ is the mean of the reference dataset and $\mu_Y$ is the mean of the sample dataset. K is the length of the dataset. $\sigma_X$, $\sigma_Y$ are the standard deviation of the reference data of the receiving sensor in a particular $T_x$-$R_x$ path and standard deviation of the sample data of the receiving sensor in that $T_x$-$R_x$ path. $\sigma_X$ and $\sigma_Y$ can be calculated as follows (equation 3):

$$\sigma_X = \sqrt{\sum_{k=1}^{K} (X_k - \mu_X)^2} \ \ and \ \ \sigma_Y = \sqrt{\sum_{k=1}^{K} (Y_k - \mu_Y)^2} \quad (3)$$

After calculating correlation coefficient for a particular $T_x$-$R_x$ path (using equation (2) and (3)) the signal dissimilarity coefficient can be calculated using equation 4.

$$A_{ij} = 1 - \rho_{ij} \quad (4)$$

Where, $A_{ij}$ measures the dissimilarity between two received signals (i.e., for damage free surface i.e. reference and for damaged surface i.e. sample) for same $T_x$-$R_x$ paths from the transmitter i and receiver j.

At step 208 of the method 200, the one or more hardware processors 104 are configured to obtain a reduced grid on the initial probabilistic damage location formed by a second set of piezoelectric sensors from among the first set of piezoelectric sensors surrounding the centroid and estimating a size of the reduced grid. From the signal dissimilarity coefficient, damage trajectory ($R_{ij}$ (x, y)) is calculated using equation (5). Where, $R_{ij}$ (x, y) indicates the initial damage location. This is calculated as follows:

$$R_{ij}(x,y) \begin{cases} RD_{ij}(x,y) \ \ when \ RD_{ij}(x,y) < \beta \\ \beta \ \ when \ RD_{ij}(x,y) \geq \beta \end{cases} \quad (5)$$

Where, $RD_{ij}$ (x ,y) can be expressed as (equation 6):

$$RD_{ij}(x,y) = \frac{\sqrt{(x-x_i)^2+(y-y_i)^2} + \sqrt{(x-x_j)^2+(y-y_j)^2}}{\sqrt{(x_j-x_i)^2+(y_j-y_i)}} \quad (6)$$

The probabilistic initial damage location for a single $T_x$-$R_x$ (with $i_{th}$ transmitter and $j_{th}$ receiver) is given as (equation 7):

$$P_{ij} = A_{ij} \text{ x } [\frac{\beta - Rij\ (x,y)}{\beta - 1}] \quad (7)$$

Where, β is free to choose shape factor. It controls the area of the damaged trajectory.

For n sensors there will be n x (n-1) such $T_x$-$R_x$. The estimated damage location considering all the $T_x$-$R_x$ paths can be found using equation (8).

$$P\,(x, y) = \sum_{i=1}^{n-1} \sum_{j=i+1}^{n} Pij \quad (8)$$

The above equation can be rewritten as (equation 9)

$$P\,(x, y) = \sum_{i=1}^{n-1} \sum_{j=i+1}^{n} A_{ij} \text{ x } [\frac{\beta - Rij\ (x,y)}{\beta - 1}] \quad (9)$$

At step 210 of the method 200, the one or more hardware processors 104 are configured to iteratively, calculate, if the reduced grid size is greater than a pre-defined grid size, a ratio of received signal energy of $T_x$-$R_x$ paths of damaged surface and received signal energy of $T_x$-$R_x$ paths of damage free surface damage. In the RAPID algorithm the attenuation of the ultrasonic guided wave is not considered. The surfaces such as composite sheets show attenuation of the guided wave. If an initial energy of the ultrasonic tone burst is E0. Then after travelling a distance d, the energy of the tone burst decreases. Let the energy of the tone burst signal becomes E(d). Then, E(d) can be mathematically expressed as (equation 10):

$$E(d) = E0 \exp\,(-\alpha.\ d) \quad (10)$$

Where, α is known as attenuation coefficient of the material.

This attenuation coefficient is different depending upon the type of composite materials. After collecting all the received signals for all the $T_x$-$R_x$ paths for both damaged surface sheet and damage free surface; the received signal energy of a $T_x$-$R_x$ path in both damaged surface sheet and damage free surface is calculated. Let x[k] be a finite duration signal which consists of q samples. The energy of the signal can be estimated as follows (equation 11):

$$E = \sum_{k=0}^{q} |x[k]|^2 \quad (11)$$

Where, $|x[k]|$ is the magnitude of the finite duration signal x[k].

Using equation (11), the received signal energy of a particular path in the damaged surface sheet and damage free surface are calculated. Let's take a $T_x$-$R_x$ path with $i^{th}$ transmitter and $j^{th}$ receiver. Let's take the reference sheet and calculate the received signal energy at $j^{th}$ receiver for that $T_x$-$R_x$ path using equation (11). Let the received signal energy in damaged surface for that receiver in that $T_x$-$R_x$ path be E1. On a similar manner, the received signal energy at $j^{th}$ receiver for that $T_x$-$R_x$ path using in the damaged surface is calculated using equation (11). Let the received signal energy in damage free surface for that same receiver in that $T_x$-$R_x$ path be E2. The ratio of these two energies ( $E_{ij} = \frac{E_1}{E_2}$ ) is calculated as the ratio of received signal energy of $T_x$-$R_x$ paths of damaged surface and received signal energy of $T_x$-$R_x$ paths of damage free surface damage.

At step 212 of the method 200, the one or more hardware processors 104 are configured to apply iteratively, a M-RAPID into the reduced grid to identify subsequent probabilistic damage locations, quadrants, subsequent set of piezoelectric sensors by factoring a ratio of the received signal energy of the $T_x$-$R_x$ path of damaged surface and the received signal energy of the $T_x$-$R_x$ path of damage free surface.

The ratio of these two energies ( $E_{ij} = \frac{E_1}{E_2}$ ) obtained above is introduced in the equation (7). Thus, the probabilistic damage location for a single $T_x$-$R_x$ path (with $i^{th}$ transmitter and $j^{th}$ receiver) in the modified RAPID algorithm is given as:

$$P_{ij} = E_{ij} \text{ x Aij x } [\frac{\beta - \text{Rij (x,y)}}{\beta - 1}] \quad (12)$$

The estimated damage location considering all the $T_x$-$R_x$ paths can be written as follows:

$$P(x, y) = \sum_{i=1}^{n-1} \sum_{j=i+1}^{n} E_{ij} \text{ x Aij x } [\frac{\beta - \text{Rij (x,y)}}{\beta - 1}] \quad (13)$$

In an embodiment, damage location probability is calculated using equation (8) with 5 sensors-grid. With these five sensors, twenty $T_x$-$R_x$ paths are considered for both damaged surface and damage free surface. The value of shape factor (β) is chosen to be 1.3. The value of shape factor is kept high to make this damage detection technique more sensitive. The application of RAPID algorithm and image thresholding (binary thresholding -60% thresholding), the probability map indicates whether damage is present or not. If no damage is present, then the algorithm will stop, and the sample is considered as undamaged surface. On the other hand, if the algorithm indicates there is some damage present in the sample surface, some portion of area in the probability map will indicate the damage. Let the portion of the area is bound between x =$l_1$, x= $l_2$, y=$m_1$ and y=$m_2$. An infinitesimally small rectangular strip is taken, which has an area $d_A$ ($d_A$ = $d_x d_y$). Also, assumed is that the x coordinate and y coordinate of the midpoint of the strip are x̃ and ỹ respectively. Then the centroid of the subsequent probabilistic damage location P1 (x1, y1) can be found out as follows:

$$x1 = \frac{\sum_{y=m1}^{m2} \sum_{x=l1}^{l2} \tilde{x} dA}{dA} \text{ and } y1 = \frac{\sum_{y=m1}^{m2} \sum_{x=l1}^{l2} \tilde{y} dA}{dA} \quad (14)$$

As the M-RAPID is iteratively applied into the reduced grid to identify subsequent probabilistic damage locations, each time, the plurality of piezoelectric sensors is identified surrounding the probabilistic damage location to form a reduced grid. The grid structure has a square geometry, so the active piezoelectric sensors are selected from corners. However, based on $T_x$-$R_x$ paths, other piezoelectric sensors may also be considered, such as, along with the piezoelectric sensors placed at the corner, sometimes, one middle sensor may also be involved to capture signals of $T_x$-$R_x$ paths. The inspection area under this reduced grid is compared with a pre-defined grid size. The pre-defined grid is a square grid with each side of the square grid is equal to the wavelength of the signal transmitted by the piezoelectric sensors. If the reduced grid size is less than the pre-defined grid size, then the probabilistic damage location thus obtained is considered as the actual damage location and no more iterations of the M-RAPID algorithm is executed. If the reduced grid size is more than the pre-defined grid, the M-RAPID continues to iteratively identifying subsequent probabilistic damage locations and subsequent reduced grid within the last identified reduced grid. The damage location probability for the damage in subsequent reduced grid is calculated using M-RAPID algorithm using equation (13) with reduced shape factor (β =1.05) within the reduced grid and with four active piezoelectric sensors selected from the corners. This is done to locate the damage more accurately in the reduced grid. After applying M-RAPID algorithm, the guided wave imaging has been carried out. Then, image thresholding (same binary thresholding as earlier) is performed in the reduced grid. This indicates (using probability map) the centroid of the damage location using equation (14) as described earlier. Let that location be $P_2$ ($x_2$, $y_2$). It will then also indicate the four nearest neighbor sensors close to $P_2$. M-RAPID also checks whether the new search grid is greater than the pre-defined search grid or not (Using step 6). This process may repeat N times before stopping, with each iteration, identifying the subsequent probabilistic damage location.

At step 214 of the method 200, the one or more hardware processors 104 are configured to average the subsequent probabilistic damage locations obtained by iterative application of the M-RAPID on the reduced grid to estimate an actual place of damage. The centroid of the damage obtained from iterative application of M-RAPID are $P_1$, $P_2$, $P_3$, ... $P_N$ respectively. The damage location can be obtained by averaging these 'N' centroid locations. Mathematically, it can be expressed as (equation 15):

$$P = (P_1 + P_2 + \ldots + P_N)/N \quad (15)$$

FIGS. 3A and 3B illustrate arrangement of piezoelectric sensors forming a grid in (a) reference sheet (damage free surface) and in (b) sample sheet (damaged surface). FIG. 3A represents a reference sheet 304 and FIG. 3B represents a sample sheet 306. The plurality of piezoelectric sensors 302 are arranged in a square shaped geometry in both reference sheet and sample sheet wherein each piezoelectric sensor is placed equidistant from each other forming a grid. Damage 308 shown in FIG. 3B is located based on grid search reduction by the plurality of piezoelectric sensors 302.

FIGS. 4A and 4B illustrate a schematic of wave propagation in (a) reference sheet (damage free surface), and (b) sample sheet (damaged sheet), in accordance with some embodiments of the present disclosure.

For a single $T_x$-$R_x$ scenario where transmitter is located at ($x_i$, $y_i$). It transmits ultrasonic tone burst of a fixed amplitude, cycle and frequency and it is received by a receiver, located at ($x_j$, $y_j$). This transmission and reception of tone burst is carried out in reference sheet (damage free surface) and in sample sheet (damaged surface). The damage location is unknown, and an assumption is made that the damage is present at (x, y). In the reference sheet, wave propagates only along the direct path represented as slid lines while in sample sheet wave propagates along indirect path represented as dotted lines in the FIGS. 4A and 4B.

FIG. 5 illustrates an active piezoelectric sensor arrangement forming reduced grid at various levels based on subsequent iterations, in accordance with some embodiments of the present disclosure.

According to FIG. 5, N level grid reduction is done during application of RAPID and iterative application of M-RAPID to identify damage location more accurately and more precisely. In an embodiment of the present invention, the value of N should be pre-determined by the user. The area of inspection should also be known beforehand. This area is an area of inspection for first level of inspection and is to be specified based on preference for selecting a size of area to be inspected at a time. It may be 100mm x 100mm or 150mm x 150 mm etc. To locate a damage 508 in the sample sheet, at the first stage, level 1 inspection area is selected and is covered by four outermost sensors 502A-502D placed at the corner and one middle sensor 504B. These five sensors 502A-502D and 504B are the active sensors participating in signal transmission and reception via plurality of $T_x$-$R_x$ paths. Similarly, level 2 inspection area is selected and is covered by four sensors 504A-504D placed at the corner and one middle sensor 506B. And level N inspection area is selected and is covered by four sensors 506A-504D placed at the corner. Therefore, the disclosed grid search reduction method for damage detection tries to locate damage by forming smaller grids within the area under inspection.

EXPERIMENTAL RESULTS: The disclosed framework has been experimented on locating damage on a glass composite sheet. Two identical glass fiber sheets (FR4 sheet) of dimensions 460mm x 310mm x 2mm are considered for the experiment. One sheet is considered as a reference sheet. In another sheet, a damage in the form of through and through hole (diameter 20 mm) is introduced and is considered further as a sample sheet. Here, an area of 125mm x 125mm is being inspected. Identical disk Piezos (Broadsens BHU 100-Resonance frequency at 389 kHz) are placed as shown in FIG. 4. A 5 cycle gaussian modulated tone burst (of 150 kHz frequency) with 130V amplitude (peak to peak) is applied to piezoelectric sensors through Broadsens D200. It has a built-in data acquisition systems which can acquire data. Data is collected at 4MHz sampling rate. When one transmitter is transmitting ultrasonic tone burst, the response is recorded by all other piezoelectric sensors. This process is repeated for all the sensors. The measurement has been done on both reference and sample sheets. Matlab 2021b has been used for signal processing and generating all the plots. As a first exploration, only two level of inspection (N=2) is performed. The $1^{st}$ level of damage localization using RAPID algorithm in the sample FR4 sheet is shown in FIG. 6 which is a probability map illustrating first level grid search reduction for damage localization in sample sheet, in accordance with some embodiments of the present disclosure.

In this stage, level 1 inspection area is considered using outermost piezoelectric sensors and one middle piezoelectric sensor. These five sensors which have been used are indicated in FIG. 6. The value of $\beta$ is taken as 1.1 in this entire study. Here, the predicted damage location is shown using probability map. In the probability map that identifies area with high probability and area with low probability. The grid in which the damage is located is also identified. It has been reported that probability values near the sensor positions are very high. Hence, the region near the sensor positions should not be considered as probable damage location. As shown in FIG. 6, a high intensity region is in quadrant 3. In the first level of inspection 20 $T_x$-$R_x$ paths are considered. Image thresholding has been carried out. After that the centroid of predicted damage location 602 has also been calculated. In the second level of damage detection, RAPID algorithm is again applied to detect the damage more precisely in the reduced grid (quadrant 3) with sensors placed at level 2 inspection area. A total of 12 $T_x$-$R_x$ paths are considered in this level. The second level of damage localization is shown in FIG. 7 which is a probability-based plot illustrating second level grid search reduction for damage localization in sample sheet, in accordance with some embodiments of the present disclosure. Predicted damage area 702 and centroid of the predicted damage 704 is identified. The location of the actual damage center 706 and centroid of the predicted damage 708 is also identified using probability-based plots as per FIG. 7. The centroid of predicted damage in the $2^{nd}$ level is at (0.146m, 0.0835m), while the actual damage center is at (0.155m, 0.067m). Hence, the error is obtained as 18.79 mm following the Euclidean distance between these two points as equation (16):

$$Error = \sqrt{\left(x_{actual} - x_{predicted}\right)^2 + \left(y_{actual} - y_{predicted}\right)^2} \quad (16)$$

FIG. 8 is a probability map plot illustrating state-of-art RAPID algorithm-based damage localization in sample sheet, in accordance with some embodiments of the present disclosure.

Damage localization is carried by using nine sensors arranged in a rectangular configuration along three rows and three columns. In this configuration a total of 72 $T_x$-$R_x$ paths have been considered. The predicted damage location 802 is at (0.1542m, 0.0875m). The Euclidean distance between the actual damage center and centroid of predicted damage turns out to be 20.01 mm. This error is comparable with the error which is obtained in two level damage localization using reduced number of sensors as per the disclosed invention.

Based on results obtained by the method disclosed in the present invention as well as state-of-art RAPID, a comparison has been drawn to understand benefits associated with the present invention. In general, using RAPID algorithm with 9 sensors a total of 72 $T_x$-$R_x$ paths are required to consider for proper damage detection. Whereas, in the disclosed invention, the method requires only 32 (i.e., 20+ 12) $T_x$-$R_x$ paths. With these 32 acquired signals, damage location can be detected. Thus, a significant reduction in computation can be achieved. In the context of damage localization, a comparative analysis comprising of number of levels, number of sensors used, total $T_x$-$R_x$ paths considered for two different configurations has been described in table 1.

Table-1

| Algorithm | No. of Levels | No. of Sensors Used (Total) | Total Tx-Rx Paths | Predicted Damage Location | Error (mm) |
|---|---|---|---|---|---|
| Standard RAPID | Single | 9 | 72 | (0.1542m, 0.0875m) | 20.01 |
| Disclosed Invention | Two | 5(1st level) & 4 (2nd level) | 32 | (0.146m, 0.0835m) | 18.79 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Thus, the embodiments of present disclosure describe the method for damage localization. Grid reduction is employed in the context of guided wave based damage localization. When ultrasonic wave propagates through a composite medium it suffers high attenuation. The energy transmitting ultrasonic signal decays exponentially while propagating through surfaces such as composites and metals. The disclosed invention utilizes modified RAPID algorithm by factoring energy of signals generated during transmission and reception of ultrasonic tone burst to identify damage more accurately.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

**1.** A processor implemented method for localizing damage, the method comprising:

transmitting, via a one or more hardware processors, a plurality of active piezoelectric sensors among a plurality of piezoelectric sensors controlled by one or more hardware processors, an ultrasonic tone burst on a damaged surface, and on a damage-free surface, wherein the plurality of piezoelectric sensors is arranged to form a grid structure;

receiving, via the one or more hardware processors, a plurality of active piezoelectric sensors among the plurality of piezoelectric sensors controlled by one or more hardware processors, an ultrasonic tone burst response from i) the damaged surface to create a sample dataset, and ii) the damage-free surface to create a reference dataset;

applying, via the one or more hardware processors, to the sample dataset and the reference dataset, a reconstruction algorithm for probabilistic inspection of defects (RAPID) to identify an initial probabilistic damage location, a centroid of the initial probabilistic damage location, a quadrant of the initial probabilistic damage location and a first set of active piezoelectric sensors among a plurality of piezo electric crystals surrounding the initial probabilistic damage location, wherein the initial probabilistic damage location is obtained by calculating a signal dissimilarity coefficient (SDC) based on dissimilarity between

i) a first received signal, representing a response received by first piezoelectric sensor of the grid acting as a receiver ($R_x$) to the ultrasonic tone burst transmitted from a second piezoelectric sensor of the grid acting as a transmitter ($T_x$) positioned on the damage free surface, wherein the receiver ($R_x$) and the transmitter ($T_x$) forms a $T_x$-$R_x$ path, and

ii) a second received signal, representing a response received by the first piezoelectric sensor acting as the receiver ($R_x$) to the ultrasonic tone burst transmitted from the second piezoelectric sensor acting as the transmitter ($T_x$) positioned on the damaged surface, and

wherein a second set of piezoelectric sensors from among the first set of piezoelectric sensors surrounding the centroid of the first damage location forms a reduced grid;

estimating, via the one or more hardware processors, a size of the reduced grid;

iteratively calculating, via the one or more hardware processors, a ratio of received signal energy of $T_x$-$R_x$ paths of damaged surface and received signal energy of $T_x$-$R_x$ paths of damage free surface until the reduced grid size is greater than a pre-defined grid size,

wherein the active piezoelectric sensors of the reduced grid transmitting the ultrasonic tone burst ($T_x$) and the plurality of active piezoelectric sensors of the reduced grid receiving the ultrasonic tone burst response ($R_x$) forms a $T_x$-$R_x$ path;

applying iteratively, via the one or more hardware processors, a modified RAPID (M-RAPID) into the reduced grid to identify a plurality of subsequent probabilistic damage locations, one or more quadrants of the subsequent probabilistic damage locations and a third set of piezoelectric sensors within the second set of piezoelectric sensors surrounding each of the subsequent probabilistic damage locations, wherein the M-RAPID factors the ratio of the received signal energy of the $T_x$-$R_x$ path of damaged surface and the received signal energy of the $T_x$-$R_x$ path of damage free surface while estimating damage in the reduced grid; and

averaging, via the one or more hardware processors, the subsequent probabilistic damage locations obtained by iterative application of the M-RAPID on the reduced grid to estimate an actual place of damage.

**2.** The method of claim 1, wherein the active piezoelectric sensors from the plurality of the piezoelectric sensors actively contribute as the transmitter and the receiver to form the $T_x$-$R_x$ paths in the damaged surface and the damage free surface.

**3.** The method of claim 1, wherein at least four active piezoelectric sensors among the plurality of piezoelectric sensors are required for receiving ultra tone burst response in the damaged surface and the damage free surface.

**4.** The method of claim 1, wherein a subset of piezoelectric sensors among the plurality of piezoelectric sensors placed at first positions of the grid transmit a 5-cycle ultrasonic tone burst and the remaining piezoelectric sensors receive the response of the ultrasonic tone burst, and in successive iteration a piezoelectric sensor placed next to the piezoelectric sensor placed at first position transmits the 5-cycle ultrasonic tone burst and rest other piezoelectric sensors receives the response of the ultrasonic tone burst; the cycle continues until all piezoelectric sensors act as the transmitter.

**5.** The method of claim 1, wherein the pre-defined grid is a square grid with each side of the square grid equal to the wavelength of the signal transmitted by the plurality of piezoelectric sensors.

**6.** The method of claim 1, wherein the method of localizing damage is applicable for damage localization on surfaces made of composite sheets and metals.

**7.** A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

transmit a plurality of active piezoelectric sensors among a plurality of piezoelectric sensors controlled by one or more hardware processors, an ultrasonic tone burst on a damaged surface, and on a damage-free surface, wherein the plurality of piezoelectric sensors is arranged to form a grid structure;
receive the plurality of active piezoelectric sensors among the plurality of piezoelectric sensors controlled by one or more hardware processors, an ultrasonic tone burst response from i) the damaged surface to create a sample dataset, and ii) the damage-free surface to create a reference dataset;
apply to the sample dataset and the reference dataset, a reconstruction algorithm for probabilistic inspection of defects (RAPID) to identify an initial probabilistic damage location, a centroid of the initial probabilistic damage location, a quadrant of the initial probabilistic damage location and a first set of active piezoelectric sensors among the plurality of piezo electric crystals surrounding the initial probabilistic damage location, wherein the initial probabilistic damage location is obtained by calculating a signal dissimilarity coefficient (SDC) based on dissimilarity between

i) a first received signal, representing a response received by a first piezoelectric sensor of the grid acting as a receiver ($R_x$) to the ultrasonic tone burst transmitted from a second piezoelectric sensor of the grid acting as a transmitter ($T_x$) positioned on the damage free surface, wherein the receiver ($R_x$) and the transmitter ($T_x$) forms a $T_x$-$R_x$ path, and
ii) a second received signal, representing a response received by the first piezoelectric sensor acting as the receiver ($R_x$) to the ultrasonic tone burst transmitted from the second piezoelectric sensor acting as the transmitter ($T_x$) positioned on the damaged surface, and

wherein a second set of piezoelectric sensors from among the first set of piezoelectric sensors surrounding the centroid of the first damage location forms a reduced grid;
estimate a size of the reduced grid;
iteratively, calculate a ratio of received signal energy of $T_x$-$R_x$ paths of damaged surface and received signal energy of $T_x$-$R_x$ paths of damage free surface until the reduced grid size is greater than a pre-defined grid size,
wherein the active piezoelectric sensors of the reduced grid transmitting the ultrasonic tone burst ($T_x$) and the plurality of active piezoelectric sensors of the reduced grid receiving the ultrasonic tone burst response ($R_x$) forms a $T_x$-$R_x$ path;
apply iteratively a modified RAPID (M-RAPID) into the reduced grid to identify a plurality of subsequent probabilistic damage locations, one or more quadrants of the subsequent probabilistic damage locations and a third set of piezoelectric sensors within the second set of piezoelectric sensors surrounding each of the subsequent probabilistic damage locations, wherein the M-RAPID factors the ratio of the received signal energy of the $T_x$-$R_x$ path of damaged surface and the received signal energy of the $T_x$-$R_x$ path of damage free surface while estimating damage in the reduced grid; and
average the subsequent probabilistic damage locations obtained by iterative application of the M-RAPID on the reduced grid to estimate an actual place of damage.

**8.** The system of claim 7, wherein the active piezoelectric sensors among the piezoelectric sensors actively contributing as the transmitter and the receiver to form the $T_x$-$R_x$ paths in the damaged surface and the damage free surface.

**9.** The system of claim 7, wherein at least four active piezoelectric sensors among the plurality of piezoelectric sensors are required for receiving the ultra-tone burst response in the damaged surface and the damage free surface.

**10.** The system of claim 7, wherein a subset of piezoelectric sensors among the plurality of piezoelectric sensors placed at first positions of the grid transmit a 5-cycle ultrasonic tone burst and remaining piezoelectric sensors receive the response of the ultrasonic tone burst, and in successive iteration a piezoelectric sensor placed next to the piezoelectric sensor placed at first position transmits the 5-cycle ultrasonic tone burst and rest other piezoelectric sensors receives the response of the ultrasonic tone burst; the cycle continues until all piezoelectric sensors act as the transmitter.

**11.** The system of claim 7, wherein the pre-defined grid is a square grid with each side of the square grid equal to the wavelength of the signal transmitted by the piezoelectric sensors.

**12.** The system of claim 7, wherein the system of localizing damage is applicable for damage localization on surfaces made of composite sheets and metals.

**13.** One or more non-transitory machine-readable information storage mediums comprising one or more instructions which when executed by one or more hardware processors cause:

transmitting a plurality of active piezoelectric sensors among a plurality of piezoelectric sensors controlled by one or more hardware processors, an ultrasonic tone burst on a damaged surface, and on a damage-free surface, wherein the plurality of piezoelectric sensors is arranged to form a grid structure;

receiving the plurality of active piezoelectric sensors among the plurality of piezoelectric sensors controlled by one or more hardware processors, an ultrasonic tone burst response from i) the damaged surface to create a sample dataset, and ii) the damage-free surface to create a reference dataset;
applying to the sample dataset and the reference dataset, a reconstruction algorithm for probabilistic inspection of defects (RAPID) to identify an initial probabilistic damage location, a centroid of the initial probabilistic damage location, a quadrant of the initial probabilistic damage location and a first set of active piezoelectric sensors among the plurality of piezo electric crystals surrounding the initial probabilistic damage location, wherein the initial probabilistic damage location is obtained by calculating a signal dissimilarity coefficient (SDC) based on dissimilarity between

i) a first received signal, representing a response received by a first piezoelectric sensor of the grid acting as a receiver ($R_x$) to the ultrasonic tone burst transmitted from a second piezoelectric sensor of the grid acting as a transmitter ($T_x$) positioned on the damage free surface, wherein the receiver ($R_x$) and the transmitter ($T_x$) forms a $T_x$-$R_x$ path, and
ii) a second received signal, representing a response received by the first piezoelectric sensor acting as the receiver ($R_x$) to the ultrasonic tone burst transmitted from the second piezoelectric sensor acting as the transmitter ($T_x$) positioned on the damaged surface, and

wherein a second set of piezoelectric sensors from among the first set of piezoelectric sensors surrounding the centroid of the first damage location forms a reduced grid;
estimating a size of the reduced grid;
iteratively calculating a ratio of received signal energy of $T_x$-$R_x$ paths of damaged surface and received signal energy of $T_x$-$R_x$ paths of damage free surface until the reduced grid size is greater than a pre-defined grid size,
wherein the active piezoelectric sensors of the reduced grid transmitting the ultrasonic tone burst ($T_x$) and the plurality of active piezoelectric sensors of the reduced grid receiving the ultrasonic tone burst response ($R_x$)

forms a $T_x$-$R_x$ path;

applying iteratively a modified RAPID (M-RAPID) into the reduced grid to identify a plurality of subsequent probabilistic damage locations, one or more quadrants of the subsequent probabilistic damage locations and a third set of piezoelectric sensors within the second set of piezoelectric sensors surrounding each of the subsequent probabilistic damage locations, wherein the M-RAPID factors the ratio of the received signal energy of the $T_x$-$R_x$ path of damaged surface and the received signal energy of the $T_x$-$R_x$ path of damage free surface while estimating damage in the reduced grid; and

averaging the subsequent probabilistic damage locations obtained by iterative application of the M-RAPID on the reduced grid to estimate an actual place of damage.

**14.** The one or more non-transitory machine-readable information storage mediums of claim 13, wherein the active piezoelectric sensors among the piezoelectric sensors actively contributing as the transmitter and the receiver to form the $T_x$-$R_x$ paths in the damaged surface and the damage free surface.

**15.** The one or more non-transitory machine-readable information storage mediums of claim 13, wherein at least four active piezoelectric sensors among the plurality of piezoelectric sensors are required for receiving the ultra-tone burst response in the damaged surface and the damage free surface,

wherein a subset of piezoelectric sensors among the plurality of piezoelectric sensors placed at first positions of the grid transmit a 5-cycle ultrasonic tone burst and remaining piezoelectric sensors receive the response of the ultrasonic tone burst, and in successive iteration a piezoelectric sensor placed next to the piezoelectric sensor placed at first position transmits the 5-cycle ultrasonic tone burst and rest other piezoelectric sensors receives the response of the ultrasonic tone burst; the cycle continues until all piezoelectric sensors act as the transmitter, and wherein the pre-defined grid is a square grid with each side of the square grid equal to the wavelength of the signal transmitted by the piezoelectric sensors, and

wherein the damage localization is executed on one or more surfaces made of composite sheets and metals.

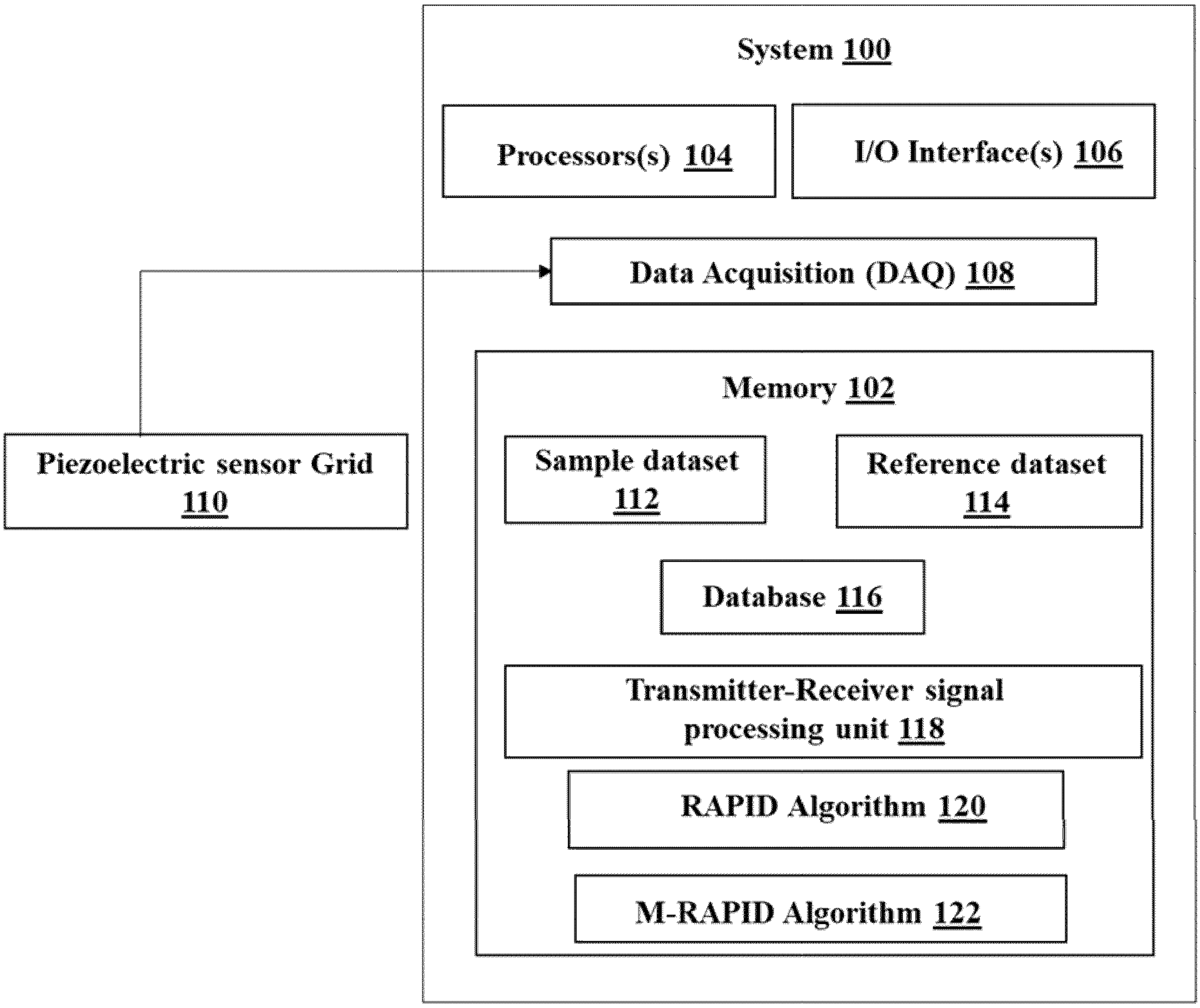
System 100
Processors(s) 104
I/O Interface(s) 106
Data Acquisition (DAQ) 108
Memory 102
Piezoelectric sensor Grid 110
Sample dataset 112
Reference dataset 114
Database 116
Transmitter-Receiver signal processing unit 118
RAPID Algorithm 120
M-RAPID Algorithm 122

FIG. 1

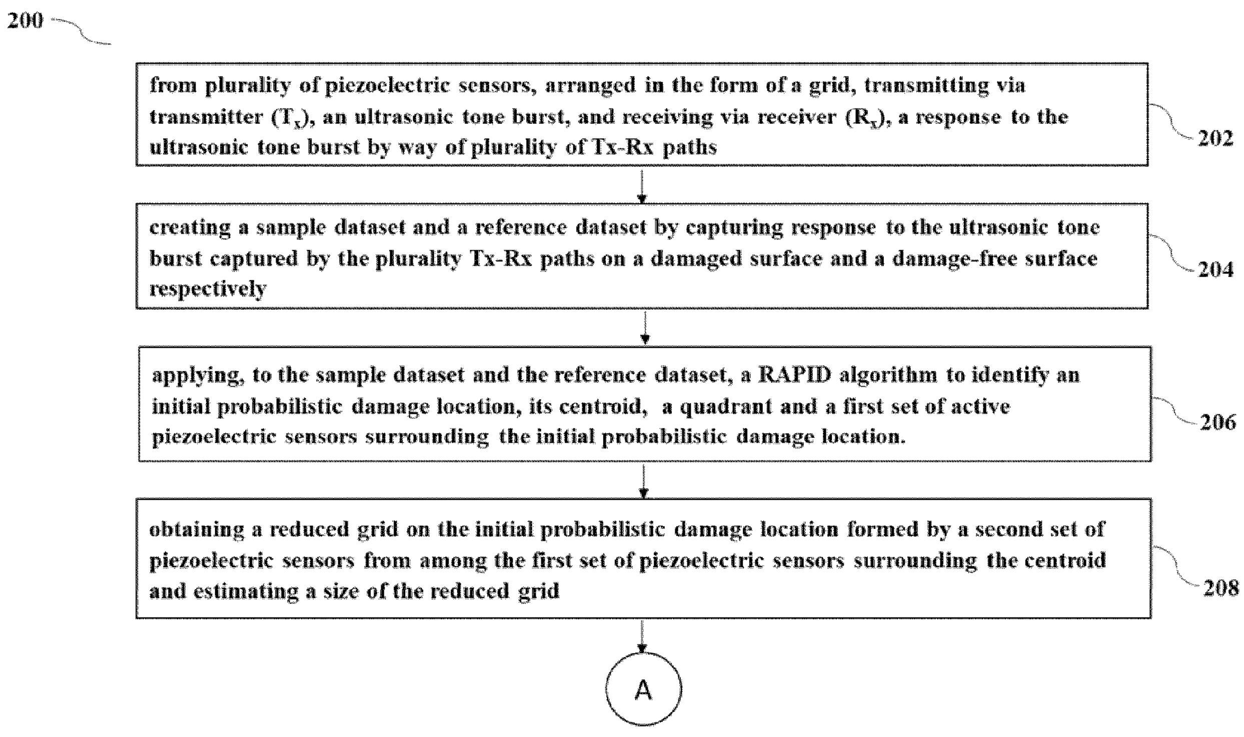
200
from plurality of piezoelectric sensors, arranged in the form of a grid, transmitting via transmitter ($T_x$), an ultrasonic tone burst, and receiving via receiver ($R_x$), a response to the ultrasonic tone burst by way of plurality of Tx-Rx paths
202
creating a sample dataset and a reference dataset by capturing response to the ultrasonic tone burst captured by the plurality Tx-Rx paths on a damaged surface and a damage-free surface respectively
204
applying, to the sample dataset and the reference dataset, a RAPID algorithm to identify an initial probabilistic damage location, its centroid, a quadrant and a first set of active piezoelectric sensors surrounding the initial probabilistic damage location.
206
obtaining a reduced grid on the initial probabilistic damage location formed by a second set of piezoelectric sensors from among the first set of piezoelectric sensors surrounding the centroid and estimating a size of the reduced grid
208
A

FIG. 2A

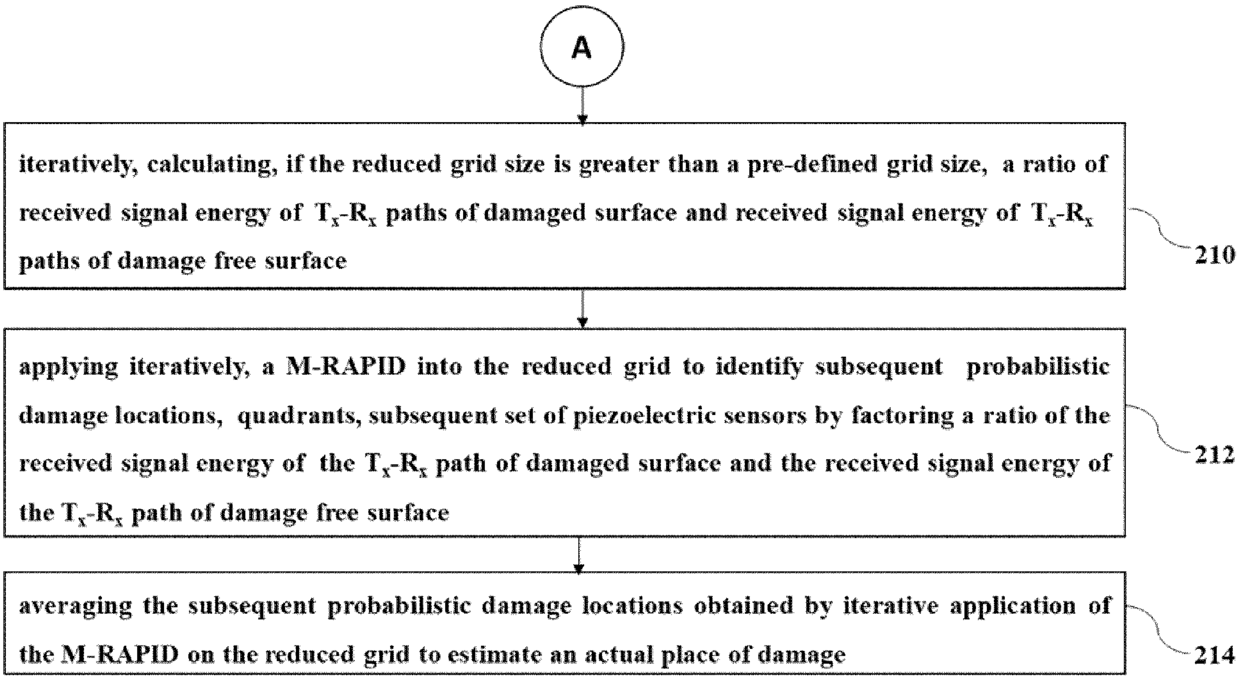
A
iteratively, calculating, if the reduced grid size is greater than a pre-defined grid size, a ratio of received signal energy of $T_x$-$R_x$ paths of damaged surface and received signal energy of $T_x$-$R_x$ paths of damage free surface
210
applying iteratively, a M-RAPID into the reduced grid to identify subsequent probabilistic damage locations, quadrants, subsequent set of piezoelectric sensors by factoring a ratio of the received signal energy of the $T_x$-$R_x$ path of damaged surface and the received signal energy of the $T_x$-$R_x$ path of damage free surface
212
averaging the subsequent probabilistic damage locations obtained by iterative application of the M-RAPID on the reduced grid to estimate an actual place of damage
214

FIG. 2B

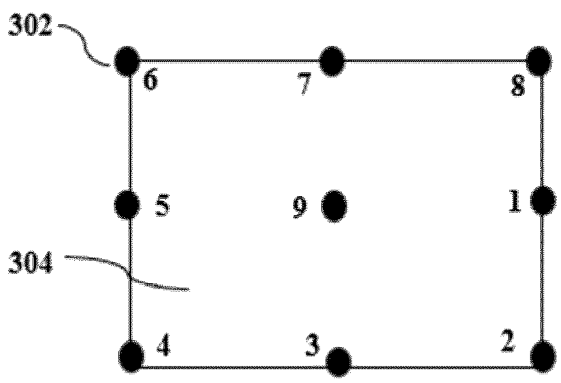


FIG. 3A

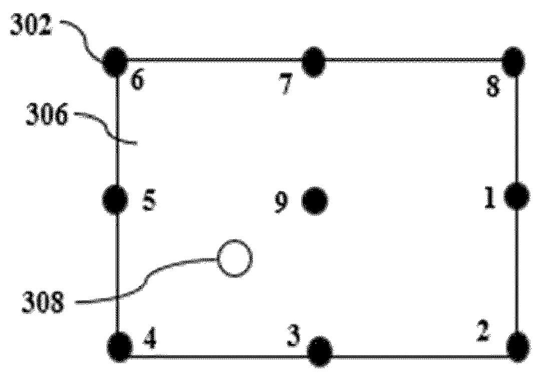


FIG. 3B

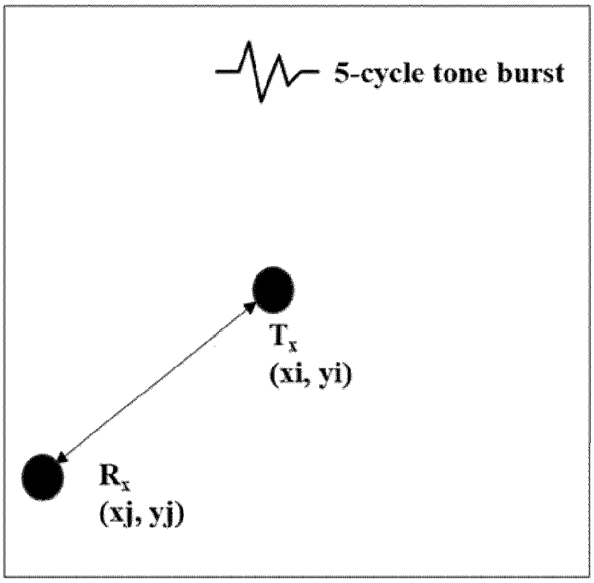
5-cycle tone burst
$T_x$
(xi, yi)
$R_x$
(xj, yj)

FIG. 4A

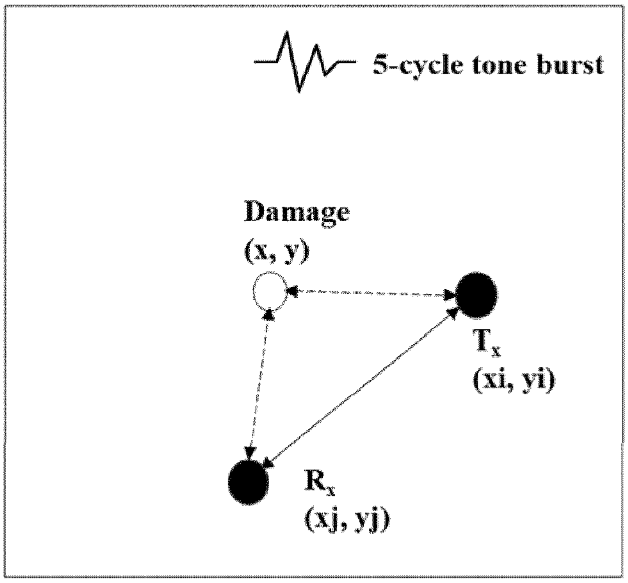
5-cycle tone burst
Damage
(x, y)
$T_x$
(xi, yi)
$R_x$
(xj, yj)

FIG. 4B

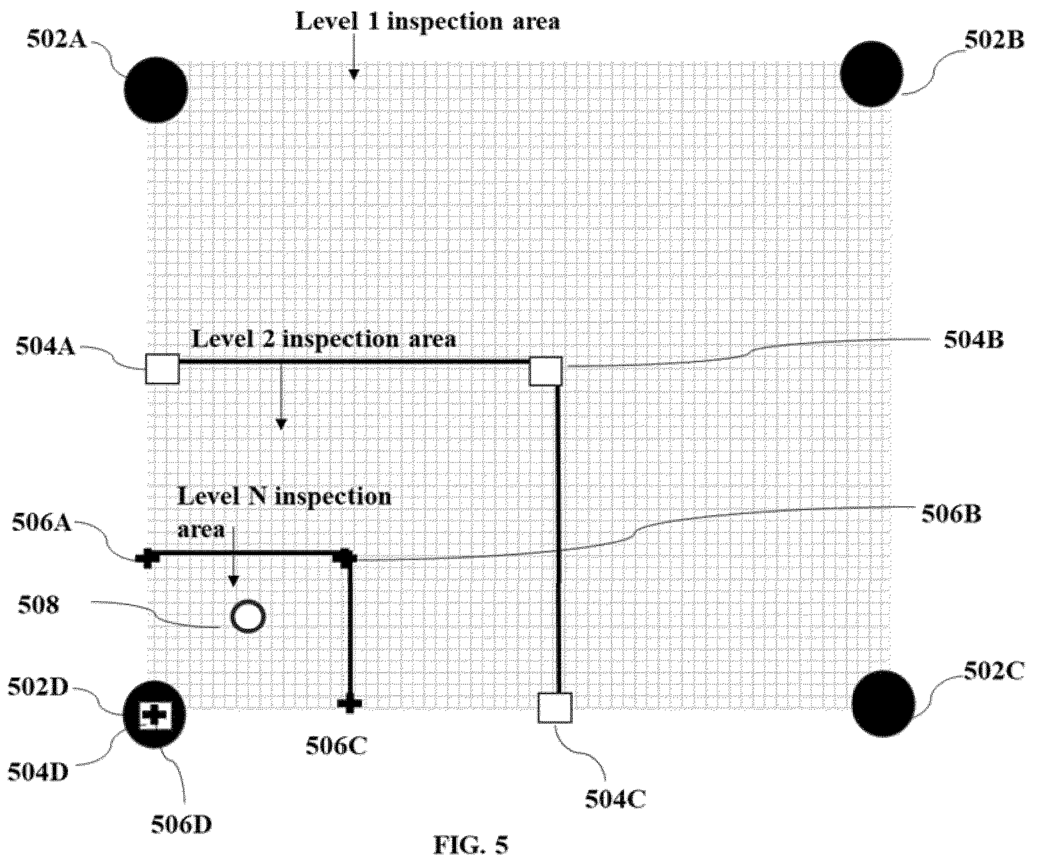
Level 1 inspection area
502A
502B
504A
Level 2 inspection area
504B
Level N inspection area
506A
506B
508
502D
502C
504D
506C
506D
504C

FIG. 5

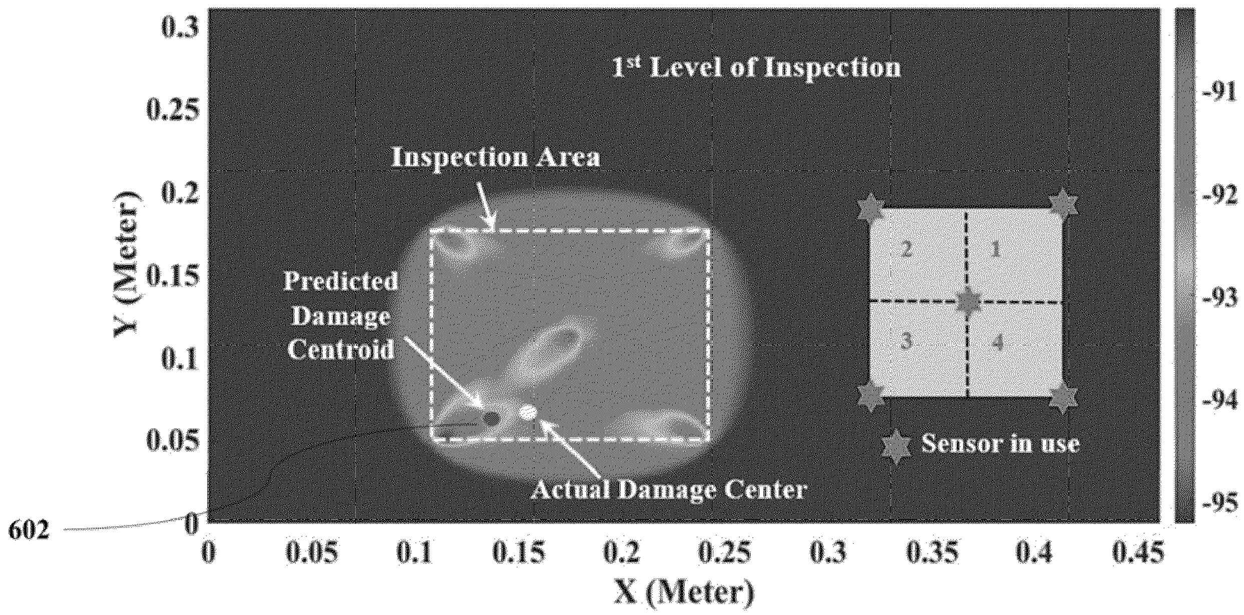
1st Level of Inspection
Inspection Area
Predicted Damage Centroid
Actual Damage Center
Sensor in use
2
1
3
4
Y (Meter)
X (Meter)
0.3
0.25
0.2
0.15
0.1
0.05
0
0
0.05
0.1
0.15
0.2
0.25
0.3
0.35
0.4
0.45
-91
-92
-93
-94
-95
602

FIG. 6

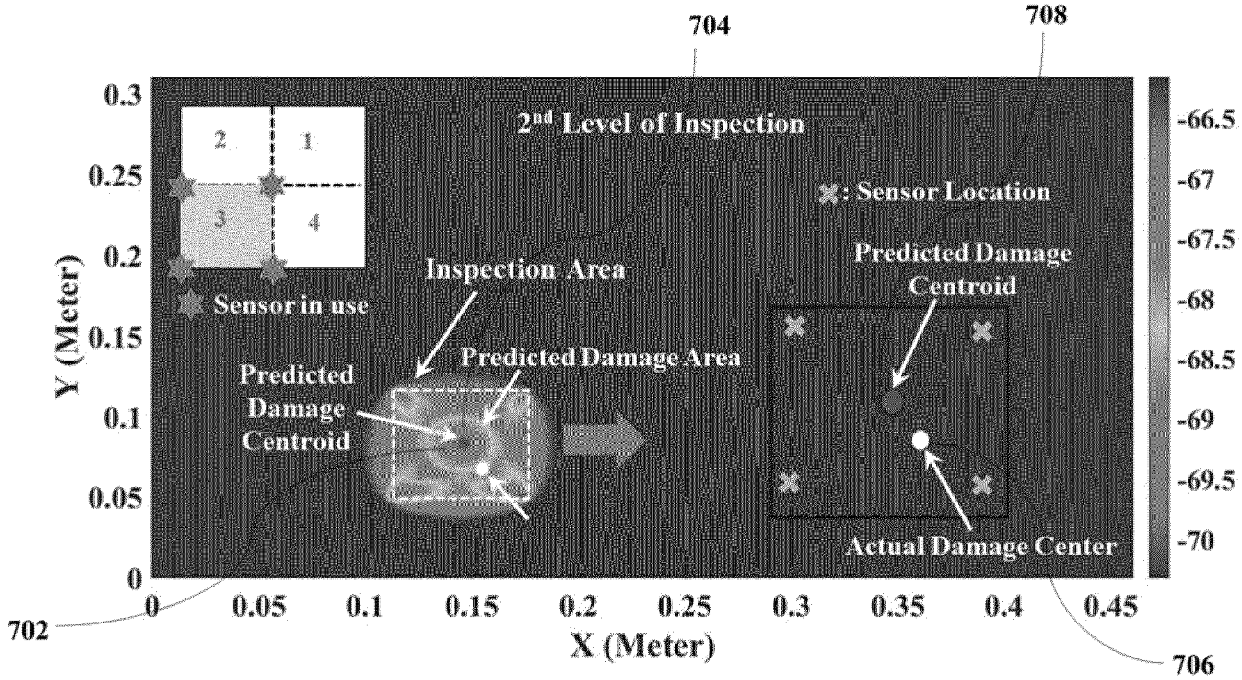
704
708
0.3
0.25
0.2
0.15
0.1
0.05
0
Y (Meter)
2
1
3
4
Sensor in use
2nd Level of Inspection
: Sensor Location
Predicted Damage Centroid
Inspection Area
Predicted Damage Area
Predicted Damage Centroid
Actual Damage Center
-66.5
-67
-67.5
-68
-68.5
-69
-69.5
-70
0
0.05
0.1
0.15
0.2
0.25
0.3
0.35
0.4
0.45
X (Meter)
702
706

FIG. 7

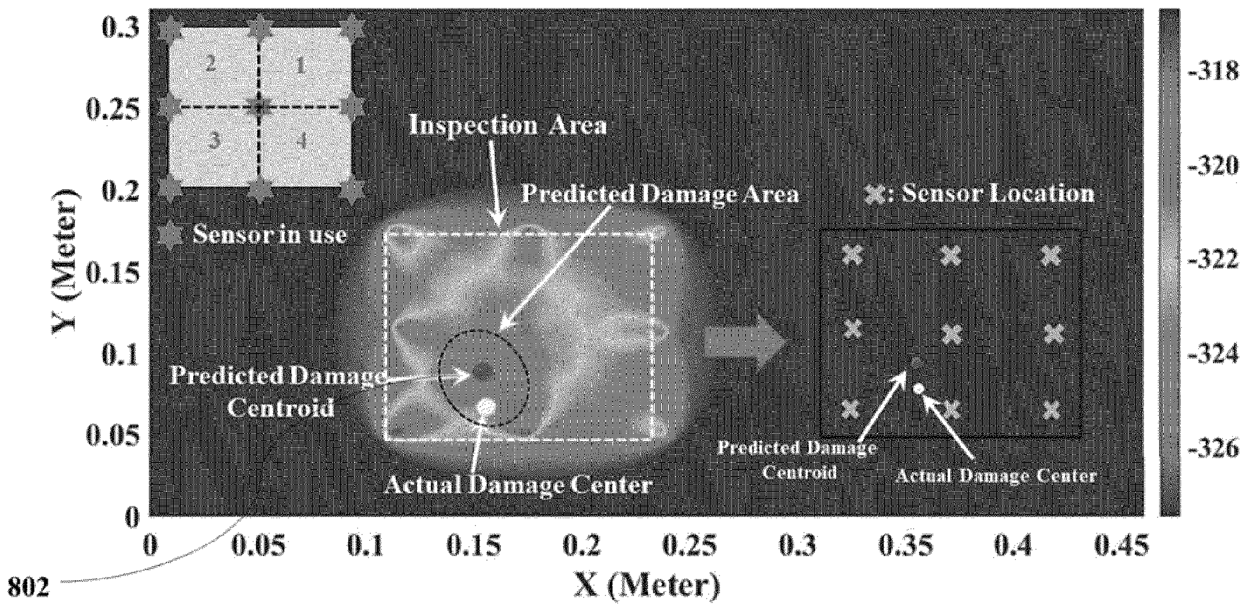
0.3
0.25
0.2
0.15
0.1
0.05
0
Y (Meter)
2
1
3
4
Sensor in use
Inspection Area
Predicted Damage Area
Predicted Damage Centroid
Actual Damage Center
: Sensor Location
Predicted Damage Centroid
Actual Damage Center
-318
-320
-322
-324
-326
0
0.05
0.1
0.15
0.2
0.25
0.3
0.35
0.4
0.45
X (Meter)
802

FIG. 8

Europäisches Patentamt
European Patent Office
Office européen des brevets

# EUROPEAN SEARCH REPORT

Application Number
EP 24 19 1325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/061816 A1 (SHI WEIJIA [CN] ET AL) 2 March 2023 (2023-03-02) * Abstract, Desc. [0009]-[0017], [0023], [0037]-[0069], Figs. 1-6 * | 1-15 | INV. G01N29/04 G01N29/44 |
| A | XIAOLIANG ZHAO ET AL: "Active health monitoring of an aircraft wing with embedded piezoelectric sensor/actuator network: I. Defect detection, localization and growth monitoring", SMART MATERIALS AND STRUCTURES, IOP PUBLISHING LTD., BRISTOL, GB, vol. 16, no. 4, 29 June 2007 (2007-06-29), pages 1208-1217, XP020120524, ISSN: 0964-1726, DOI: 10.1088/0964-1726/16/4/032 * Abstract, Figures 11,12 and corresponding passages of description * | 1-15 | |
| A | US 2012/330570 A1 (HEDL RADEK [CZ] ET AL) 27 December 2012 (2012-12-27) * Abstract, Desc. [0001], [0005], [0026]-[0032], Fig. 1 * | 1-15 | TECHNICAL FIELDS SEARCHED (IPC) G01N |

The present search report has been drawn up for all claims

| Place of search | Date of completion of the search | Examiner |
|---|---|---|
| Munich | 2 January 2025 | Reim, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

# ANNEX TO THE EUROPEAN SEARCH REPORT ON EUROPEAN PATENT APPLICATION NO.

EP 24 19 1325

This annex lists the patent family members relating to the patent documents cited in the above-mentioned European search report. The members are as contained in the European Patent Office EDP file on
The European Patent Office is in no way liable for these particulars which are merely given for the purpose of information.

02-01-2025

| Patent document cited in search report | Publication date | Patent family member(s) | Publication date |
|---|---|---|---|
| US 2023061816 A1 | 02-03-2023 | CN 113720916 A | 30-11-2021 |
| | | US 2023061816 A1 | 02-03-2023 |
| US 2012330570 A1 | 27-12-2012 | CN 102854245 A | 02-01-2013 |
| | | EP 2541242 A2 | 02-01-2013 |
| | | US 2012330570 A1 | 27-12-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- IN 202321055203